(19)

Europäisches
Patentamt
European
Patent Office
Office européen
des brevets

(11)  **EP 4 043 514 A1**

(12)  # EUROPEAN PATENT APPLICATION
published in accordance with Art. 153(4) EPC

(43) Date of publication:
**17.08.2022  Bulletin 2022/33**

(21) Application number: **20873714.8**

(22) Date of filing: **07.10.2020**

(51) International Patent Classification (IPC):
*C08J 3/12* (2006.01)      *C08L 23/12* (2006.01)
*C08F 10/06* (2006.01)      *B29C 48/00* (2019.01)
*B29B 9/10* (2006.01)      *B29B 9/16* (2006.01)
*C08K 3/04* (2006.01)      *B29C 48/04* (2019.01)

(52) Cooperative Patent Classification (CPC):
**B29B 9/10; B29B 9/16; B29C 48/00; B29C 48/04;
C08F 10/06; C08J 3/12; C08K 3/04; C08L 23/12**

(86) International application number:
**PCT/KR2020/013655**

(87) International publication number:
**WO 2021/071242 (15.04.2021 Gazette 2021/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.10.2019  KR 20190126385
11.10.2019  KR 20190126202
22.11.2019  KR 20190151167
06.10.2020  KR 20200128950**

(71) Applicant: **LG Hausys, Ltd.
Seoul 04637 (KR)**

(72) Inventors:
• **SONG, Jae Han
Seoul 07796 (KR)**

• **KANG, Sung Yong
Seoul 07796 (KR)**
• **LEE, Hee-Jung
Seoul 07796 (KR)**
• **KIM, Min Gyung
Seoul 07796 (KR)**
• **LIM, Jae Ho
Seoul 07796 (KR)**
• **CHOI, Jun Ho
Seoul 07796 (KR)**
• **GO, Yu Jin
Seoul 07796 (KR)**
• **KONG, Hyo Jae
Seoul 07796 (KR)**

(74) Representative: **Goddar, Heinz J.
Boehmert & Boehmert
Anwaltspartnerschaft mbB
Pettenkoferstrasse 22
80336 München (DE)**

(54)  **POLYPROPYLENE PARTICLES, PREPARATION METHOD THEREFOR, BIPOLAR PLATE MANUFACTURED USING SAME, AND REDOX FLOW BATTERY COMPRISING SAME**

(57)    The present invention relates to polypropylene particles and a method for preparing same, the polypropylene particles being formed from a polypropylene resin, and having a melting index (M.I.) of 1000 g/10 min or more when the particles are re-melted under a temperature condition of 150°C to 250°C and a condition of atmospheric pressure to a pressure of 15 MPa.

EP 4 043 514 A1

【Figure 1】

**Description**

[Technical Field]

The present invention relates to polypropylene particles and a method for preparing the same, and more particularly, to polypropylene particles for manufacturing a bipolar plate having increased kneadability with a carbon material in a carbon material mixing process by having high fluidity in a melted state and having high powder flowability and kneadability, and having a low electrical resistance value when manufactured to a bipolar plate.

[Background Art]

Currently, researches on secondary batteries are being actively conducted, and in order for secondary batteries to be used for large capacity power storage, energy storage density needs to be high. In this regard, a redox flow secondary battery is in the spotlight as a most suitable high-capacity and high-efficiency secondary battery.

In a redox flow secondary battery, a bipolar plate provides a flow path through which positive electrode and negative electrode electrolytes flow, and performs a role of migrating electrons. Accordingly, as the bipolar plate, it may be preferable to use a material having excellent corrosion resistance to an electrolyte solution and having excellent electron mobility. Commercially available graphite-based bipolar plates have high electron mobility, but have low corrosion resistance for an electrolyte, which results in electrochemical corrosion caused by the electrolyte solution when driving a redox flow secondary battery for a long period of time, and thus the use is very limited. Accordingly, researches on enhancing corrosion resistance of a bipolar plate have been required.

When enhancing corrosion resistance of the bipolar plate, corrosion resistance may be enhanced compared to the commercially available graphite-based bipolar plates, however, a phenomenon of increasing specific resistance may occur. This has a disadvantage of reducing energy efficiency when used in a redox flow secondary battery. In consideration of such aspects, existing bipolar plates are manufactured by mold processing to a synthetic resin composition formed by adding a conductive material such as carbon black, graphite, or metal powder to a vinyl ester resin, a phenol resin, a polypropylene resin, a polyethylene resin, a propylene-ethylene copolymer resin, or a fluorine resin.

The polypropylene used for a bipolar plate is provided in a particle form to be processed, and when processed, may be mixed with a bipolar plate material such as graphite. In order to prepare polypropylene particles, the following three methods have been mainly used in the art. Specifically, the methods for preparing polypropylene particles include a pulverization method represented by freeze pulverization; a solvent dissolution precipitation method of dissolving in a high temperature solvent and then cooled to precipitate or dissolving in a solvent and adding a bad solvent to precipitate; and a melt-kneading method of mixing a thermoplastic resin and an incompatible resin in a mixer to form a composition having the thermoplastic resin in a dispersed phase and the thermoplastic resin and the incompatible resin in a continuous phase, and then removing the incompatible resin to obtain thermoplastic resin particles.

In such a process of melt-mixing thermoplastic polymer resin particles and inorganic material particles, the degree of kneading of the inorganic material particles greatly affects performance of a product. The product obtained by melt-mixing thermoplastic polymer resin particles and inorganic material particles may be used in automotive light-weighting materials, electromagnetic wave shielding materials, battery separators and the like. In general melt-mixing of thermoplastic polymer resin particles and inorganic material particles, sizes of the thermoplastic polymer resin particles and the inorganic material particles are made to be similar, and the sizes of the two particles are made as small as possible to increase kneadability of the mixture. However, making thermoplastic polymer resin particles and inorganic material particles to have similar sizes and setting the sizes to be as small as possible are highly costly, and the effect of increasing kneadability is small.

Due to the above-described problems and the like, needs to improve properties of thermoplastic polymer resin particles capable of increasing kneadability when mixing with the inorganic material particles have been required.

[Prior Art Document]

[Patent Document]

(Patent Document 1) Japanese Laid-open Patent Publication No. 2001-288273

[Disclosure]

[Technical Problem]

The present invention is directed to providing polypropylene particles having high fluidity and kneadability in a melted state, and thereby capable of enhancing performance such as electrical resistance of a manufactured article by increasing a degree of kneading of a process progressing melt-mixing with an inorganic material, and a method for preparing the same.

[Technical Solution]

For that purpose, one embodiment of the present invention provides polypropylene particles, the particles being formed from a polypropylene resin, and having a melting index (M.I.) of 1000 g/10 min or greater when the particles are re-melted under a temperature condition of 150°C to 250°C and a pressure condition of atmospheric pressure to 15 MPa.

Another embodiment of the present invention provides a method for preparing the polypropylene particles, the method including (1) extruding a polypropylene resin by supplying to an extruder; (2) supplying the extruded polypropylene resin and air to a nozzle, granulating the polypropylene resin by bringing the polypropylene resin into contact with the air, and then discharging the granulated polypropylene resin; and (3) supplying the discharged polypropylene particles to a cooler to cool the polypropylene particles, and obtaining the cooled polypropylene particles.

[Advantageous Effects]

Polypropylene particles according to the present invention have high fluidity and kneadability in a melted state, and are thereby capable of increasing a degree of kneading of a process progressing melt-mixing with an inorganic material, and, in addition thereto, have increased polypropylene flowability in a melted state in a process of melting and using the polypropylene particles. Accordingly, when manufactured to a bipolar plate for a redox battery, there are advantages of enhancing corrosion resistance of the bipolar plate and reducing electrical resistance.

[Description of Drawings]

FIG. 1 is an image schematically illustrating a shape of polypropylene particles of the present invention.
FIG. 2 is a process flow chart schematically illustrating a method for preparing polypropylene particles according to the present invention.
FIG. 3 is a cross-sectional view of a nozzle discharge unit showing positions of supplying a polypropylene resin and air to the nozzle according to a specific embodiment of the present invention.
FIG. 4 is a mimetic diagram illustrating a bipolar plate manufactured according to a specific embodiment of the present invention.

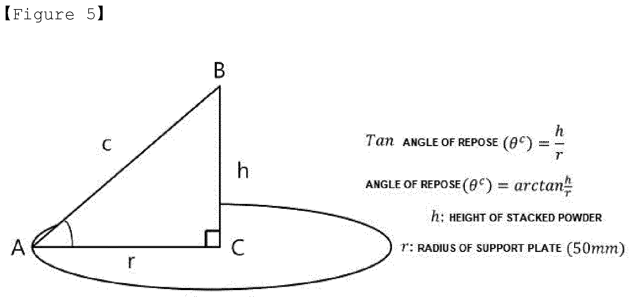

FIG. 5 is a diagram showing a method of measuring an angle of repose according to a specific embodiment of the present invention.

[Best Mode]

Specific examples provided according to the present invention may all be accomplished by the following descriptions. The following descriptions need to be understood as describing preferred embodiments of the present invention, and it needs to be understood that the present invention is not necessarily limited thereto.

Regarding a numerical range in the following specification, an expression of "to" is used as a meaning to include both an upper limit and a lower limit of a range, and when an upper limit or a lower limit is not included, an expression of "less than", "excessive", "or less", or "or more" is used to specifically indicate the inclusion.

The present invention provides polypropylene particles having properties suitable to be used for manufacturing a bipolar plate of a redox flow battery, and the like, which have not been able to obtain using an existing particle preparation method. Hereinafter, the polypropylene particles according to the present invention will be specifically described.

## Polypropylene Particles

The present invention provides polypropylene particles prepared by extruding a polypropylene resin, and then granulating by bringing into contact with air. A method for preparing the polypropylene particles according to the present invention is an improved method compared to existing pulverization method, solvent dissolution precipitation method and melt-kneading method, and the specific preparation method will be described in the following "method for preparing polypropylene particles" part.

The polypropylene particles according to the present invention are particles formed from a polypropylene resin, and when re-melting the particles under a temperature condition of 150°C to 250°C and a pressure condition of atmospheric pressure to 15 MPa, the particles may have a melting index (M.I.) of 1000 g/10 min or more, preferably 1500 g/10 min to 2000 g/10 min, and more preferably 1800 g/10 min to 2000 g/10 min. The melting index (M.I.) is a flow rate when extruding a melt from a piston under a predetermined certain condition, and refers to an index indicating readiness of a flow of the melt. Herein, a unit of the melting index may be expressed as g/10 min (230°C, 2.16 kg). Since the polypropylene particles according to the present invention have properties as above, polypropylene flowability in a melted state may increase in a process in which the polypropylene particles are melted to be used. In addition, the melting index when re-melting the polypropylene particles according to the present invention under the temperature condition and the pressure condition is from 90% to 110% and preferably 100% to 110% compared to the melting index of the polypropylene resin before forming the polypropylene particles (that is, the polypropylene resin that is a raw material used when preparing the polypropylene particles of the present invention). When the melting index after re-melting the particles is greater than 110% compared to a melting index of the polypropylene resin before forming the polypropylene particles, the material is decomposed compared to the initial resin during the process resulting in a higher M.I. compared to the initial resin due to a decrease in the average molecular weight, and a problem of declining mechanical properties of the polypropylene is caused. In addition, when the melting index after re-melting the particles is less than 90% compared to the melting index of the polypropylene resin before forming the polypropylene particles, a problem of poor flowability is caused.

In addition, the polypropylene particles according to the present invention are homopolymer particles formed by polymerizing one type of propylene monomer. In other words, as the propylene monomer, a pure propylene monomer not mixed with other monomers may be used.

In addition, the polypropylene particles according to the present invention have a particle diameter of 1 $\mu$m to 100 $\mu$m, and more specifically 5 $\mu$m to 80 $\mu$m. When the particles have a particle diameter of less than 1 $\mu$m, effective mixing with a bipolar plate material such as graphite is difficult due to aggregation of the particles, which causes a problem of reducing mechanical strength of a bipolar plate using the same. When the particles have a particle diameter of greater than 100 $\mu$m, the particles are too large making it difficult to efficiently disperse a bipolar plate material such as graphite, which causes a problem of reducing electrical resistance of a bipolar plate using the same. The polypropylene particles have an average particle diameter ($D_{50}$) (or 50% cumulative volume particle diameter) of 25 $\mu$m to 50 $\mu$m, and more specifically 35 $\mu$m to 40 $\mu$m. When the average particle diameter of the particles satisfies the above-described range, a bipolar plate material such as graphite may be uniformly dispersed while maintaining a proper distance between the materials. The polypropylene particles have 10% cumulative volume particle diameter ($D_{10}$) of 10 $\mu$m to 25 $\mu$m, and more specifically 15 $\mu$m to 25 $\mu$m. The polypropylene particles have 90% cumulative volume particle diameter ($D_{90}$) of 80 $\mu$m to 150 $\mu$m, and more specifically 90 $\mu$m to 120 $\mu$m. In the present specification, particle size distribution of the polypropylene particles is measured using a wet method using a particle size analyzer (S3500, Microtrac company), and the specific method is described in the following examples. Herein, $D_{10}$, $D_{50}$ and $D_{90}$ mean particle diameters where cumulative volume percentages correspond to 10%, 50% and 90%, respectively, in the cumulative volume distribution of the particles. Regarding the particle size distribution of the polypropylene particles, the polypropylene particles according to the present invention have a D value of 5 to 15 and more specifically 7 to 12, and the D value is calculated by the following Calculation Formula 1.

$$[\text{Calculation Formula 1}]$$

$$D = \left(\frac{D_{90}}{D_{50}}\right)^2 + \left(\frac{D_{50}}{D_{10}}\right)^2$$

The D value is a value of quantifying where larger particles having a 90% cumulative volume particle diameter ($D_{90}$) and smaller particles having a 10% cumulative volume particle diameter ($D_{10}$) are located based on particles having an average particle diameter ($D_{50}$). Herein, the particles having a relatively large particle diameter perform a role of supporting particles having an average particle diameter when used together with the particles having an average particle diameter, and the particles having a relatively small particle diameter perform a role of filling voids between particles having an average particle diameter when used together with the particles having an average particle diameter. As the D value is smaller, the particle diameters of the particles are distributed closer to the average particle diameter, and as the D value is larger, the particle diameters of the particles are distributed farther from the average particle diameter. When the D value is small, the ratio of the particles closes to the average particle diameter increases making it difficult to obtain effects resulting from particle size diversity, and when the D value is large on the other hand, the ratio of the particles far from the average particle diameter increases making it difficult to select and use a particle size that becomes the standard. When the D value of the average particle diameter particles satisfies the above-mentioned range, large particles and small particles are distributed in a proper ratio based on the average particle diameter, and excellent properties may be obtained when used in a bipolar plate for a redox flow battery, and the like.

In the present invention, a shape of the particle is evaluated by the following aspect ratio and roundness, and as the aspect ratio and the roundness are close to 1, the particle shape is interpreted as being close to a spherical shape. The aspect ratio is calculated by the following Calculation Formula 2.

[Calculation Formula 2]

$$\text{Aspect ratio} = \text{major axis}/\text{minor axis}$$

In addition, the roundness is calculated by the following Calculation Formula 3.

[Calculation Formula 3]

$$\text{Roundness} = 4 \times \text{area}/(\pi \times \text{major axis}^2)$$

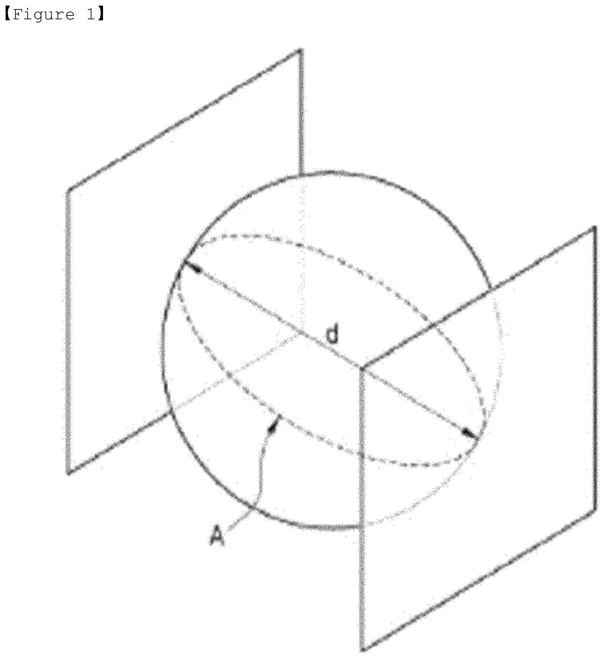

In order to specifically describe the calculation formulae, FIG. 1 schematically illustrating the polypropylene particles is provided. According to FIG. 1, the "major axis" in Calculation Formulae 2 and 3 means a longest distance among vertical distances (d) between two parallel tangent lines of the 2D image (cross-section) of the polypropylene particle, and the "minor axis" means a shortest distance among vertical distances (d) between two parallel tangent lines of the 2D image (cross-section) of the polypropylene particle. In addition, the "area" in Calculation Formula 3 means a cross-sectional area including the major axis of the polypropylene particle. FIG. 1 is an example in which a vertical distance (d) between two parallel tangent planes of the polypropylene particle is a major axis, and illustrates an area (A).

According to one specific embodiment of the present invention, the polypropylene particles according to the present invention may have an aspect ratio of greater than or equal to 1.00 and less than 1.05 and more specifically greater than or equal to 1.02 and less than 1.05, and may have roundness of 0.95 to 1.00 and more specifically 0.98 to 1.00. When the shape of the polypropylene particles satisfies the above-described aspect ratio and roundness ranges, flowability and uniformity of the polypropylene particles increase and the particles are readily handled when used in a bipolar plate and the like, and the bipolar plate and the like using the particles may have enhanced quality by excellent flowability and dispersibility of the particles.

The numerical values according to Calculation Formulae 2 and 3 may be measured by image processing the image of the polypropylene particles using ImageJ (National Institutes of Health (NIH))-converting to a binary image and quantifying roundness of individual particles.

The polypropylene particles according to the present invention are particles formed in a continuous matrix form from a polypropylene resin. Being formed in a continuous matrix form from a polypropylene resin means continuously forming a dense structure from a polypropylene resin without additional components. By extruding and melting the polypropylene resin, and then granulating the melt with air, the polypropylene particles are continuously produced with a dense structure. On the other hand, according to an existing preparation method, particles are formed by introducing additional components or particles are formed through a noncontinuous process of cooling and pulverizing, and therefore, the particles are not formed in a continuous matrix form.

The particles formed in a continuous matrix form from a polypropylene resin have high purity since, in the particle preparation process, impurities are not mixed thereinto basically. Herein, the "impurities" mean components other than polypropylene that may be mixed thereinto in the particle preparation. Examples of the impurities may include solvents for dispersing the polypropylene resin, heavy metal components included during the pulverizing or grinding process, unreacted monomers included in the polymerization process, and the like. According to one specific embodiment of the present invention, the impurity content in the polypropylene particles of the present invention may be 50 ppm or less, preferably 20 ppm or less, and more preferably 5 ppm or less.

In addition, the particles may additionally have other properties as well as purity. As one of such properties, the polypropylene particles have a cold crystallization temperature ($T_{cc}$) peak appearing at a temperature between the glass transition temperature ($T_g$) and the melting point ($T_m$) in a differential scanning calorimetry (DSC) curve derived from a 10°C/min temperature raising analysis using a DSC. The polypropylene particles are spherical solid particles at room temperature. When conducting a temperature raising analysis on such particles using a differential scanning calorimetry, fluidity gradually increases as a temperature increases. Herein, the polypropylene particles have a cold crystallization temperature ($T_{cc}$) peak appearing at a temperature between the glass transition temperature ($T_g$) and the melting point ($T_m$), which means that the polypropylene particles have properties of generating heat before being melted. According to one specific embodiment of the present invention, the cold crystallization temperature ($T_{cc}$) appears in a 30% to 70% section between the glass transition temperature ($T_g$) and the melting point ($T_m$). In the section, 0% is the glass transition temperature ($T_g$) and 100% is the melting point ($T_m$). In addition, according to the DSC curve, the polypropylene particles may have a difference ($\Delta$H1-$\Delta$H2) value of 3 J/g to 100 J/g between the amount of heat absorption ($\Delta$H1) and the amount of heat generation ($\Delta$H2). By such properties, an advantage of being processed at a lower temperature compared to a processing temperature of polypropylene particles of the same type may be obtained when using the polypropylene particles in a heating process.

The polypropylene particles of the present invention have a similar degree of compression to existing polypropylene particles. The degree of compression may be calculated by the following Calculation Formula 4, and according to one specific embodiment of the present invention, the polypropylene particles have a degree of compression of 10% to 20%.

$$[\text{Calculation Formula 4}]$$

$$\text{Degree of compression} = (P-R)/P \times 100$$

In Calculation Formula 4, P means tapped bulk density, and R means relaxed bulk density.

As described above, the polypropylene particles according to the present invention have favorable flowability, and therefore, voids between the particles may be readily filled, and a degree of compression is maintained at a certain level or higher accordingly. A degree of compression of polypropylene particles may affect quality of a product when manufacturing the product through the particles. In the case of a molded product, using polypropylene particles having a degree of compression of certain level or higher as in the present invention may be effective in minimizing voids that may be present in the product. According to one specific embodiment of the present invention, the polypropylene particles have tapped bulk density of 0.45 g/cm$^3$ to 0.6 g/cm$^3$.

The polypropylene particles according to the present invention have a flow time of 20 seconds to 30 seconds. The flow time is a numerical value indicating fluidity of a powder. Having a short flow time means small frictional resistance between particles, and when frictional resistance is small between particles, the particles are readily handled. The polypropylene particles according to the present invention have a shorter flow time compared to existing polypropylene particles, and therefore, are readily handled due to favorable fluidity.

The polypropylene particles according to the present invention have a degree of crystallinity of 5% to 10%. The polypropylene particles have a lower degree of crystallinity compared to large-diameter particles in a pellet form, and the polypropylene particles according to the present invention are readily processed by the low degree of crystallinity.

In addition, the polypropylene particles according to the present invention minimize electrical resistance when manufactured to a bipolar plate, and specifically, a molded article having a thickness of 1.0 mm manufactured by mixing 25% by weight of the polypropylene particles with 75% by weight of inorganic particles, maintaining a temperature of 200°C for 2 minutes, applying a pressure of 16 kg/cm$^2$ for 2 minutes, and cooling to room temperature has low electrical resistance of 4.0 m$\Omega$cm or less. Herein, the electrical resistance value of the molded article may be measured using common methods in the art, and the molded article may be preferably measured using a 4-point electrical resistance measurement method.

As the inorganic particles, those used in a bipolar plate may be used without particular limit, and preferably, graphite-based materials such as graphite, carbon powder, carbon black and coke-graphite, or materials such as cellulose fiber and cotton flock may be used.

The polypropylene particles according to the present invention are formed from a polypropylene resin, and have an angle of repose of 45° or less.

In the present invention, the angle of repose means, when stacking particles on a horizontal plate, a maximum angle of inclination maintaining the inclination, and, when stacking molecular particles as an example, refers to an angle formed by the inclined plane and the horizontal plane. A method of measuring the angle of repose includes a discharge method, a drop method, an injection method, an inclination method and the like. Measuring the angle of repose is for understanding powder properties not identified by a chemical analysis or particle size analysis, and as fine particles have smaller particle diameters or are more angular, the angle of repose may increase. The angle of repose may be measured using various devices and methods, and for example, an angle of repose tester may be used.

Since flowability of fine particles is predictable by such an angle of repose, a surface texture or the like may be an important factor in controlling the angle of repose in the polypropylene particles according to the present invention. The angle of repose greatly varies depending on the size or shape of particles, and when the angle of repose does not satisfy a proper range, flowability is low and the particles may stick to each other.

Accordingly, the polypropylene particles according to the present invention may secure proper flowability by employing the angle of repose at 45° or less, and preferably employing the angle of repose at 40° or less, more preferably at 35° or less and most preferably at 30° or less (herein, those having the angle of repose of 0° is excluded), and kneadability with a carbon material may increase in a carbon material mixing process.

The polypropylene particles having the above-described properties are prepared using the following preparation method. Hereinafter, the method for preparing the polypropylene particles according to the present invention will be specifically described.

**Method for Preparing Polypropylene Particles**

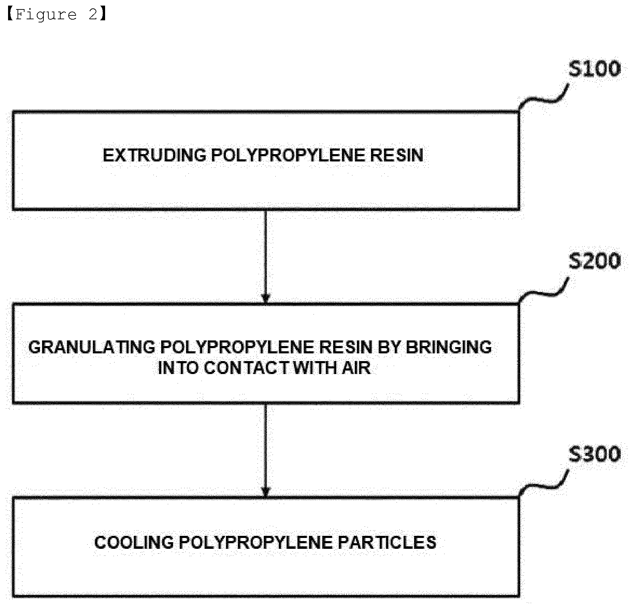

FIG. 2 schematically illustrates a process flow chart for the preparation method. The preparation method includes extruding a polypropylene resin by supplying to an extruder (S100); supplying the extruded polypropylene resin and air to a nozzle, granulating the polypropylene resin by bringing the polypropylene resin into contact with the air, and then discharging the granulated polypropylene resin (S200); and (3) supplying the discharged polypropylene particles to a cooler to cool the polypropylene particles, and obtaining the cooled polypropylene particles (S300). Hereinafter, each step of the preparation method will be specifically described.

To prepare the polypropylene particles according to the present invention, a polypropylene resin that is a raw material is supplied to an extruder and extruded first. By extruding a polypropylene resin, the polypropylene resin has properties suitable for particle processing in a nozzle. As the polypropylene resin used as a raw material, those having a melting index (M.I.) of 100 g/10 min or greater may be used, and polypropylene resins having a melting index of preferably 100 g/10 min to 2000 g/10 min, more preferably 500 g/10 min to 2000 g/10 min and most preferably 500 g/10 min to 2000 g/10 min may be used.

In addition, the polypropylene resin used as a raw material preferably has a weight average molecular weight (Mw) of 10,000 g/mol to 200,000 g/mol considering proper properties of the prepared particles.

The extruder to which the polypropylene resin is supplied heats and pressurizes the polypropylene resin to control properties such as viscosity of the polypropylene resin. The type of the extruder is not particularly limited as long as it is capable of controlling to have properties suitable for granulation in the nozzle. According to one specific example of the present invention, a twin screw extruder may be used as the extruder for efficient extrusion. Inside the extruder is preferably maintained at 150°C to 300°C, specifically 170°C to 270°C, and more specifically 200°C to 250°C. When the inner temperature of the extruder is lower than 150°C, the polypropylene resin has high viscosity, which is not suitable for granulation in the nozzle, and is not efficient for extrusion as well due to low flowability of the polypropylene resin in the extruder. In addition, when the inner temperature of the extruder is higher than 300°C, efficient extrusion is possible due to high flowability of the polypropylene resin, however, it is difficult to finely control properties when granulating the polypropylene resin in the nozzle.

The amount of extrusion of the polypropylene resin may be set so that properties of the polypropylene resin are readily controlled considering a size of the extruder. According to one specific embodiment of the present invention, the polypropylene resin is extruded at a rate of 1 kg/hr to 10 kg/hr. The extruded polypropylene resin may have viscosity of 0.5 Pa·s to 20 Pa·s, specifically 1 Pa·s to 15 Pa·s, and more specifically 2 Pa·s to 10 Pa·s. When the polypropylene resin has viscosity of less than 0.5Pa·s, the particles are difficult to process in the nozzle, and when the polypropylene resin has viscosity of greater than 20 Pa·s, processing efficiency decreases due to low flowability of the polypropylene resin in the nozzle. The extruded polypropylene resin may have a temperature of 150°C to 250°C.

The polypropylene resin extruded from the extruder is supplied to the nozzle. Together with the polypropylene resin, air is also supplied to the nozzle. The air is brought into contact with the polypropylene resin in the nozzle to granulate the polypropylene resin. High temperature air is supplied to the nozzle so that properties of the polypropylene resin are properly maintained. According to one specific embodiment of the present invention, the air may have a temperature of 250°C to 450°C, preferably 260°C to 400°C, and more preferably 270°C to 350°C. The air having a temperature of lower than 250°C or higher than 450°C causes a problem of changing properties of the surface in contact with the air when preparing the polypropylene particles from the polypropylene resin in an undesirable direction. Particularly, when the air temperature is higher than 450°C, excessive heat is supplied to the contact surface with the air, which may cause decomposition of the polypropylene on the particle surface.

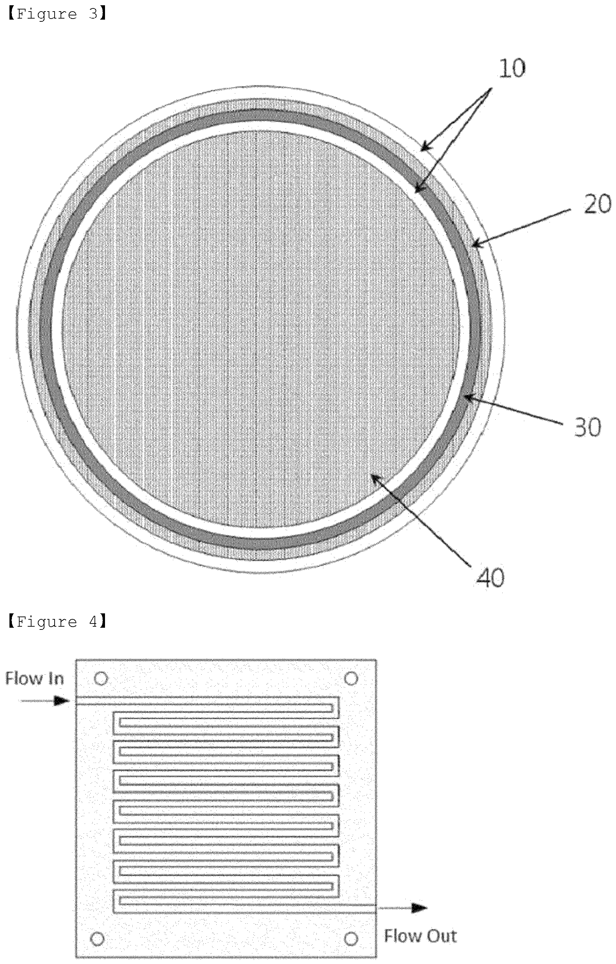

Supply positions of the polypropylene resin and the air supplied to the nozzle are set so that the polypropylene particles have proper size and shape, and the formed particles are evenly dispersed. FIG. 3 is a cross-sectional view of a discharge unit of the nozzle, and supply positions of the polypropylene resin and the air according to one specific embodiment of the present invention are specifically described through FIG. 3. In the present specification, the position of the nozzle is expressed as an "injection unit", a "discharge unit", an "end unit" and the like for specific descriptions. The "injection unit" of the nozzle means a position where the nozzle starts, and the "discharge unit" of the nozzle means a position where the nozzle ends. In addition, the "end unit" of the nozzle means a position from a two-thirds point of the nozzle to the discharge unit. Herein, a 0 point of the nozzle is the injection unit of the nozzle, and a 1 point of the nozzle is the discharge unit of the nozzle.

As illustrated in FIG. 3, the cross-section perpendicular to the flow direction of the polypropylene resin and the air is circular. The air is supplied through a first air flow 40 supplied to the center of the circle and a second air flow 20 supplied to an outer part of the circle, and the polypropylene resin is supplied between the first air flow 40 and the second air flow 20. Each supply flow (polypropylene resin flow 30, first air flow 40 and second air flow 20) from the time the polypropylene resin and the air are supplied to the injection unit of the nozzle to immediately before the discharge unit of the nozzle is separated by a structure inside the nozzle. The polypropylene resin flow and the second air flow merge immediately before the discharge unit of the nozzle bringing the polypropylene resin into contact with the air, and the polypropylene resin is granulated thereby. On the other hand, the first air flow is separated from the polypropylene resin flow and the second air flow by the structure inside the nozzle until the polypropylene resin and the air are discharged from the nozzle. The first air flow performs a role of preventing the particles of the polypropylene resin granulated by the second air flow from adhering in the discharge unit of the nozzle, and, after discharged from the nozzle, evenly dispersing the discharged particles before supplied to a cooler.

The polypropylene resin extruded from the extruder is all supplied to the above-described position of the nozzle, and the flow rate of the air supplied to the nozzle may be adjusted depending on the flow rate of the extruded polypropylene resin. According to one specific embodiment of the present invention, the air is supplied to the nozzle at a flow rate of 1 m³/hr to 300 m³/hr, specifically 30 m³/hr to 240 m³/hr, and more specifically 60 m³/hr to 180 m³/hr. Within the above-mentioned flow rate range of the air, the air is supplied separately to the first air flow and the second air flow. As described above, the polypropylene resin is granulated by the second air flow, and properties of the particles may be determined by a ratio between the polypropylene resin and the second air flow as well as a temperature of the second air flow. According to one specific embodiment of the present invention, a cross-sectional area ratio between the polypropylene resin and the second air flow may be from 4:1 to 6:1, and specifically from 4.3:1 to 5:1 based on the discharge unit cross-section of the nozzle. When the ratio between the polypropylene resin and the second air flow is adjusted within the above-mentioned range, polypropylene particles with proper size and shape and having high utility in a bipolar plate and the like may be prepared.

Since the polypropylene resin is granulated in the nozzle, inside the nozzle is adjusted to have a temperature suitable for granulating the polypropylene resin. A sudden increase in the temperature may change the structure of polypropylene, the temperature from the extruder to the discharge unit of the nozzle may be raised step by step. Accordingly, the temperature inside the nozzle is set to a range higher than the temperature inside the extruder on average. The temperature of the end unit of the nozzle is separated defined below, and therefore, unless particularly mentioned otherwise, the temperature inside the nozzle in the present specification means an average temperature of the rest of the parts of the nozzle other than the end unit of the nozzle. According to one specific embodiment of the present invention, inside the nozzle may be maintained at 250°C to 350°C. When the temperature inside the nozzle is lower than 250°C, sufficient heat for satisfying properties is not transferred when granulating the polypropylene resin, and when the temperature inside the nozzle is higher than 350°C, excessive heat is supplied to the polypropylene resin, which may change the structure of polypropylene.

The end unit of the nozzle may be maintained at a temperature higher than the average temperature inside the nozzle in order to enhance external and internal properties of the produced particles. The temperature of the end unit of the nozzle may be determined between a glass transition temperature ($T_g$) and a pyrolysis temperature ($T_d$) of the polypropylene, and may specifically be determined by the following Calculation Formula 5.

[Calculation Formula 5]

End unit temperature=glass transition temperature ($T_g$)+(pyrolysis temperature ($T_d$)-glass transition temperature ($T_g$))×B

Herein, B may be from 0.5 to 1.5, specifically from 0.85 to 1.45, and more specifically from 1.2 to 1.4. When B is less than 0.5, enhancement in the external and internal properties of the particles obtained from an increase in the temperature of the end unit of the nozzle is difficult to expect, and when B is greater than 1.5, heat actually transferred to the polypropylene in the end unit of the nozzle excessively increases, which may change the polypropylene structure. The glass transition temperature and the pyrolysis temperature may vary depending on the type, the degree of polymerization, the structure and the like of a polymer. According to one specific embodiment of the present invention, polypropylene having a glass transition temperature of 0°C to 50°C and a pyrolysis temperature of 250°C to 350°C may be used as the polypropylene of the present invention. Since the end unit of the nozzle is maintained at a temperature higher than the average temperature of the nozzle, an additional heating means may be provided in the end unit of the nozzle in some cases.

The polypropylene particles discharged from the nozzle are supplied to a cooler. The nozzle and the cooler may be placed apart, and in this case, the discharged polypropylene particles are firstly cooled by surrounding air before supplied to the cooler. From the nozzle, high temperature air is also discharged as well as the polypropylene particles, and by separating the nozzle and the cooler, the high temperature air may be discharged to the outside instead of to the cooler, and cooling efficiency may increase in the cooler. According to one specific embodiment of the present invention, the cooler is placed apart from the nozzle by 100 mm to 500 mm, specifically by 150 mm to 400 mm, and more specifically by 200 mm to 300 mm. When the separated distance is shorter than the above-mentioned distance, cooling efficiency is low since a large amount of the high temperature air is injected into the cooling chamber, and when the separated distance is longer than the above-mentioned distance, rapid cooling by the cooling chamber may not be accomplished since the cooled amount by the surrounding air increases. In addition, an angle of spray injection when discharging the polypropylene particles from the nozzle may be from 10° to 60°, and when discharging the polypropylene particles at the corresponding angle, the effect obtained by placing the nozzle and the cooler apart may be doubled.

The cooler may cool the polypropylene particles by supplying low temperature air into the cooler and then bringing the air into contact with the polypropylene particles. The low temperature air forms a rotating air flow in the cooler, and by the rotating air flow, the polypropylene particles may secure a sufficient residence time in the cooler. The flow rate of the air supplied to the cooler may be adjusted depending on the supplied amount of the polypropylene particles, and according to one specific embodiment of the present invention, the air may be supplied to the cooler at a flow rate of 1 m$^3$/min to 10 m$^3$/min. The air preferably has a temperature of -30°C to -20°C. By supplying air, which is cryogenic compared to the polypropylene particles supplied to the cooler, into the cooler, the polypropylene particles are rapidly cooled, and an inner structure of the high temperature polypropylene particles may be properly maintained when discharged. The polypropylene particles are re-heated when actually used for manufacturing a product, and herein, the re-heated polypropylene particles have properties advantageous for processing. The polypropylene particles cooled by the low temperature air are cooled to 40°C or lower and discharged, and the discharged particles are collected through a cyclone or a bag filter.

Hereinafter, preferred examples are provided in order to help understanding the present invention, however, the following examples are provided in order to more readily understand the present invention, and the present invention is not limited thereto.

## Example

### [Example 1]

100% by weight of a polypropylene resin (PolyMirae, MF650Y, Mw: approximately 90,000 g/mol, glass transition temperature ($T_g$): approximately 10°C, pyrolysis temperature ($T_d$): approximately 300°C, M.I.: 1800 g/10 min (230°C, 2.16 kg)) was supplied to a twin screw extruder (diameter (D)=32 mm, length/diameter (L/D)=40). The twin screw extruder was set to a temperature condition of approximately 220°C and an extrusion amount condition of approximately 15 kg/hr to conduct extrusion. The extruded polypropylene resin had viscosity of approximately 10 Pa·s, and the extruded polypropylene resin was supplied to a nozzle set to an inner temperature of approximately 300°C and an end unit temperature of approximately 400°C (B value according to Calculation Formula 5 was approximately 1.34). In addition, air of approximately 350°C was supplied to the nozzle at a flow rate of approximately 7 m$^3$/min. The air was supplied to a center part and an outer part of the nozzle cross-section, and the extruded polypropylene resin was supplied between the center part and the outer part of the nozzle to which the air was supplied. The air supplied to the outer part and the extruded polypropylene supplied between the center part and the outer part to which the air was supplied had a cross-sectional area ratio of approximately 4.3:1. The polypropylene resin supplied to the nozzle was granulated by being brought into contact with the high temperature air, and the granulated particles were sprayed from the nozzle. An angle of spray injection from the nozzle was approximately 45°, and the sprayed particles were supplied to a cooling chamber (diameter (D)=1,100 mm, length (L)=3,500 mm) separated from the nozzle by approximately 200 mm. In addition, the cooling chamber was adjusted so as to form a rotational air flow by injecting air of -25°C at a flow rate of approximately 6 m$^3$/min from before supplying the sprayed particles. The particles sufficiently cooled to 40°C or lower in the cooling chamber were collected through a cyclone or a bag filter.

### [Comparative Example 1]

Polypropylene particles were prepared in the same manner except that a polypropylene resin (LG Chem., M1850, glass transition temperature: 10°C, pyrolysis temperature: approximately 280°C, M.I.: 70 g/10 min (230°C, 2.16 kg)) was used.

### [Comparative Example 2]

Polypropylene particles were prepared in the same manner as in Example 1 except that the end unit temperature was adjusted to 140°C (B value according to Calculation Formula 5 was approximately 0.45).

**[Comparative Example 3]**

Polypropylene particles were prepared in the same manner as in Example 1 except that the end unit temperature was adjusted to 460°C (B value according to Calculation Formula 5 was approximately 1.55).

**Experimental Example 1**

Particle size distribution of the polypropylene particles prepared according to each of Example 1 and Comparative Examples 1 and 2 was measured, and the results are shown in the following Table 1. Specifically, the particle size distribution was measured by the following two steps.
1) Pretreatment of sample: approximately 0.003 wt% of the powder sample was introduced to ethanol, and the powder sample was dispersed into the ethanol using a 50 watt/30 kHz ultrasonic disperser by setting to 30% of the maximum amplitude, and applying ultrasonic waves for approximately 120 seconds.
2) Measurement of particle size distribution: particle size distribution was measured in accordance with the ISO 13320 standard.

[Table 1]

|  | Particle Size Distribution | | | |
| --- | --- | --- | --- | --- |
|  | $D_{10}$ ($\mu$m) | $D_{50}$ (pm) | $D_{90}$ (pm) | D |
| Example 1 | 21 | 42 | 94 | 8.83 |
| Comparative Example 1 | 37 | 119 | 261 | 15.26 |
| Comparative Example 2 | 7 | 24 | 76 | 20.38 |

According to Table 1, it is identified that the particle diameter of the particles prepared according to Example 1 is not biased in a larger or smaller direction based on the average particle diameter unlike the particle diameters of the particles prepared according to Comparative Examples 1 and 2, and the ratios of $D_{50}/D_{10}$ and $D_{90}/D_{50}$ are maintained similarly. In addition, it is identified that the particle diameter of the particles prepared according to Example 1 is not excessively large unlike the particle diameters of the particles prepared according to Comparative Examples 1 to 3, and the ratios of $D_{50}/D_{10}$ and $D_{90}/D_{50}$ are maintained at a certain level or higher (approximately 2 to 3).
When the particles have the same particle diameter distribution as the particles prepared according to Example 1, disadvantages occurring when having only an average particle diameter may be efficiently compensated when used in a product.

**Experimental Example 2**

25% by weight of the particles prepared according to each of Example 1 and Comparative Examples 1 to 3 were mixed with 75% by weight graphite particles (GRAFGUARD, 160-50N) using a Henschel mixer (for 5 minutes at 100 rpm), then the mixture was introduced to a mold for manufacturing a bipolar plate on a hot press device heated to 200°C, and after waiting for 2 minutes for the polypropylene particles to melt, a pressure of 16 kg/cm$^2$ was applied for 2 minutes. After that, the temperature was lowered to room temperature by flowing cooling water through a cooling water flow path flowing outside the hot press, and electrical resistance of a molded article manufactured to a thickness of 1.0 mm was measured using a 4-point electrical resistance measurement method (ISO 11359-2) using FPP-2000A.

[Table 2]

|  | Electrical Resistance [m$\Omega$ cm] |
| --- | --- |
| Example 1 | 3.44 |
| Comparative Example 1 | 8.31 |
| Comparative Example 2 | 4.54 |
| Comparative Example 3 | 10.12 |

As shown in Table 2, Example 1 using the PP particles of the present invention had a very low electrical resistance value compared to Comparative Examples 1 to 3, and through this, it was seen that electrical conductivity was excellent, and through this, it was seen that kneadability with the graphite was high.

Through this, it was seen that, when polypropylene particles having a high melting index as in Example 1 were mixed with a carbon material, excellent electrical properties were obtained by having high kneadability.

**Experimental Example 3**

100 g of the polypropylene particles prepared in each of Example 1 and Comparative Examples 1 and 2 were melted under a temperature condition of 230°C, and the amount passing through a capillary for 10 minutes when applying a pressure with a weight of 2.16 kg was measured to measure a melting index (M.I.) (unit, g/10 min). The results are shown in the following Table 3.

[Table 3]

|  | Re-melting M.I. | Re-melting M.I./Initial Resin M.I. |
| --- | --- | --- |
| Example 1 | 1920 | 1.067 |
| Comparative Example 1 | 81 | 1.157 |
| Comparative Example 2 | 42 | 0.840 |

As shown in Table 3, it was seen that Example 1 using the PP particles prepared using the preparation method of the present invention had a significantly higher re-melting M.I. value compared to Comparative Examples 1 and 2, and the re-melting M.I./initial resin M.I. had a value between 90% to 110%. Through this, it was seen that the PP particles prepared using the preparation method of the present invention had superior polypropylene flowability in a melted state when used in a process in which the polypropylene particles are re-melted and used.

**Experimental Example 4**

An angle of repose was measured using the polypropylene particles prepared according to each of Example 1 and Comparative Examples 1 and 2. In addition, tapped density of the polypropylene particles was measured. The results are shown in the following Table 4.

The angle of repose was measured using an angle of repose tester manufactured by Copley Scientific Limited, and when dropping 100 g or more of the particles from 7.5 cm above the machine to the center of a horizontal flat plate (petri dish) at a constant speed, the height of the inclined plane and the radius of the flat plate were checked to obtain the angle of repose as in FIG. 4, and the results are shown in the following Table 4.

In addition, tapped density was determined by placing the particles in a mechanically compressible cylinder in a tapped density tester (model name: JV1000, manufacturer: Copley (England)), and then measuring density after compression.

[Table 4]

|  | Angle of Repose | Tapped Density |
| --- | --- | --- |
| Example 1 | 29 | 0.82 |
| Comparative Example 1 | 46 | 0.79 |
| Comparative Example 2 | 48 | 0.77 |

As shown in Table 4, it was seen that Example 1 using the PP particles prepared using the preparation method of the present invention had a lower angle of repose and higher tapped density compared to Comparative Examples 1 and 2.

Simple modifications and variations of the present invention all fall within the scope of the present invention, and the specific scope of protection of the present invention will become apparent by the scope of appended claims.

[Reference Numeral]

d: Vertical Distance between Two Parallel Tangent Planes

A: Area
10: Nozzle
20: Second Air Flow
30: Polypropylene Resin Flow
40: First Air Flow

**Claims**

1. Polypropylene particles, the particles being formed from a polypropylene resin; and
having a melting index (M.I.) of 1000 g/10 min or greater when the particles are re-melted under a temperature condition of 150°C to 250°C and a pressure condition of atmospheric pressure to 15 MPa.

2. The polypropylene particles of Claim 1, wherein the particles are formed in a continuous matrix form from a polypropylene resin, and have a particle diameter of 1 $\mu$m to 100 $\mu$m.

3. The polypropylene particles of Claim 1, wherein the particles have an average particle diameter ($D_{50}$) of 25 $\mu$m to 50 $\mu$m.

4. The polypropylene particles of Claim 1, wherein the particles have a 10% cumulative volume particle diameter ($D_{10}$) of 10 $\mu$m to 25 $\mu$m and a 90% cumulative volume particle diameter ($D_{90}$) of 80 $\mu$m to 150 $\mu$m.

5. The polypropylene particles of Claim 1, wherein the particles have a D value calculated by the following Calculation Formula 1 of 5 to 15:

[Calculation Formula 1]

$$D = \left(\frac{D_{90}}{D_{50}}\right)^2 + \left(\frac{D_{50}}{D_{10}}\right)^2$$

herein, $D_{10}$ is a 10% cumulative volume particle diameter, $D_{50}$ is an average particle diameter, and $D_{90}$ is a 90% cumulative volume particle diameter.

6. The polypropylene particles of Claim 1, wherein the melting index when the particles are re-melted is from 90% to 110% compared to a melting index of the polypropylene resin before forming the polypropylene particles.

7. The polypropylene particles of Claim 1, wherein a molded article having a thickness of 1.0 mm manufactured by mixing 25% by weight of the polypropylene particles with 75% by weight of inorganic particles, maintaining a temperature of 200°C for 2 minutes, applying a pressure of 16 kg/cm$^2$ for 2 minutes, and cooling to room temperature has electrical resistance of 4.0 m$\Omega$cm or less.

8. The polypropylene particles of Claim 7, wherein the inorganic particles are a graphite-based material.

9. The polypropylene particles for manufacturing a bipolar plate of Claim 8, wherein the graphite-based material is any one or more selected from the group consisting of graphite, carbon powder, carbon black and coke-graphite.

10. The polypropylene particles for manufacturing a bipolar plate of Claim 7, wherein the electrical resistance value of the mixture is measured using a 4-point electrical resistance measurement method.

11. The polypropylene particles of Claim 1, wherein the particles have an angle of repose of 45° or less.

12. The polypropylene particles of Claim 11, wherein the angle of repose is measured using an angle of repose tester.

13. The polypropylene particles of Claim 1, wherein the particles have a degree of compression, which is calculated by the following Calculation Formula 4, of 10% to 20%:

[Calculation Formula 4]

degree of compression=(tapped bulk density-relaxed bulk density)/tapped bulk density×100.

14. The polypropylene particles of Claim 1, wherein the particles have a flow time of 20 seconds to 30 seconds.

15. A method for preparing the polypropylene particles of Claim 1, the method comprising:

(1) extruding a polypropylene resin by supplying to an extruder;
(2) supplying the extruded polypropylene resin and air to a nozzle, granulating the polypropylene resin by bringing the polypropylene resin into contact with the air, and then discharging the granulated polypropylene resin; and
(3) supplying the discharged polypropylene particles to a cooler to cool the polypropylene particles, and obtaining the cooled polypropylene particles.

16. The method for preparing the polypropylene particles of Claim 15, wherein, in (2), the extruded polypropylene resin supplied to the nozzle has melt viscosity of 0.5 Pa·s to 20 Pa·s.

17. The method for preparing the polypropylene particles of Claim 15, wherein, in (2), the air is supplied to a center part and an outer part based on a cross-section of the nozzle, and the extruded polypropylene resin is supplied between the center part and the outer part.

18. The method for preparing the polypropylene particles of Claim 17, wherein, in (2), the air supplied to the outer part based on the cross-section of the nozzle and the extruded polypropylene resin supplied between the center part and the outer part have a cross-sectional area ratio of 4:1 to 6:1.

19. The method for preparing the polypropylene particles of Claim 15, wherein, in (2), inside the nozzle is maintained at 250°C to 350°C.

20. The method for preparing the polypropylene particles of Claim 19, wherein, in (2), a discharge unit of the nozzle is maintained at a temperature calculated by the following Calculation Formula 5:

[Calculation Formula 5]

discharge unit temperature=glass transition temperature $(T_g)$+(pyrolysis temperature $(T_d)$-glass transition temperature $(T_g)$)×B

in Calculation Formula 5, the glass transition temperature and the pyrolysis temperature are values for the polypropylene, and B is from 0.5 to 1.5.

21. The method for preparing the polypropylene particles of Claim 15, wherein the polypropylene resin has a melting index (M.I.) of 100 g/10 min or greater.

【Figure 1】

【Figure 2】

【Figure 3】

【Figure 4】

【Figure 5】

$$Tan \text{ ANGLE OF REPOSE } (\theta^c) = \frac{h}{r}$$

$$\text{ANGLE OF REPOSE} (\theta^c) = arctan\frac{h}{r}$$

$h$: HEIGHT OF STACKED POWDER

$r$: RADIUS OF SUPPORT PLATE $(50mm)$

| INTERNATIONAL SEARCH REPORT | International application No.<br>**PCT/KR2020/013655** |
|---|---|

| A. | **CLASSIFICATION OF SUBJECT MATTER** |
|---|---|

**C08J 3/12**(2006.01)i; **C08L 23/12**(2006.01)i; **C08F 10/06**(2006.01)i; **B29C 48/00**(2019.01)i; **B29B 9/10**(2006.01)i; **B29B 9/16**(2006.01)i; **C08K 3/04**(2006.01)i; **B29C 48/04**(2019.01)i

According to International Patent Classification (IPC) or to both national classification and IPC

| B. | **FIELDS SEARCHED** |
|---|---|

Minimum documentation searched (classification system followed by classification symbols)

C08J 3/12; C08K 3/013; C08L 23/06; C08L 23/10; C08L 23/16; H01M 8/02; H01M 8/10; C08L 23/12; C08F 10/06; B29C 48/00; B29B 9/10; B29B 9/16; C08K 3/04; B29C 48/04

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 바이폴라 플레이트(bipolar plate), 폴리프로필렌 입자(polypropylene particle), 용융지수(melting index; MI), 입경(diameter), 무기입자(inorganic particle)

| C. | **DOCUMENTS CONSIDERED TO BE RELEVANT** |
|---|---|

| Category* | Citation of document, with indication, where appropriate, of the relevant passages | Relevant to claim No. |
|---|---|---|
| A | KR 10-2016-0033857 A (LG HAUSYS, LTD.) 29 March 2016. See claims 1-14; paragraphs [0027] and [0030]-[0065]; and figures 1-2. | 1-21 |
| A | KR 10-2018-0103667 A (LG HAUSYS, LTD.) 19 September 2018. See claims 1-12; paragraphs [0022] and [0055]-[0074]; and figure 2. | 1-21 |
| A | KR 10-2011-0128618 A (HYUNDAI MOTOR COMPANY et al.) 30 November 2011. See claim 1; and paragraphs [0010], [0012]-[0021], [0073] and [0074]. | 1-21 |
| A | KR 10-2012-0096350 A (KOREA UNIVERSITY RESEARCH AND BUSINESS FOUNDATION) 30 August 2012. See claims 1-8. | 1-21 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 January 2021** | **15 January 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2020/013655**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0076498 A (LG CHEM, LTD.) 02 July 2019. See claims 1-11. | 1-21 |

Form PCT/ISA/210 (second sheet) (July 2019)

**INTERNATIONAL SEARCH REPORT**
Information on patent family members

International application No.

**PCT/KR2020/013655**

| Patent document cited in search report | | | Publication date (day/month/year) | Patent family member(s) | | | Publication date (day/month/year) |
|---|---|---|---|---|---|---|---|
| KR | 10-2016-0033857 | A | 29 March 2016 | KR | 10-2003682 | B1 | 26 July 2019 |
| KR | 10-2018-0103667 | A | 19 September 2018 | EP | 3594271 | A1 | 15 January 2020 |
| | | | | EP | 3594270 | A1 | 15 January 2020 |
| | | | | EP | 3594269 | A1 | 15 January 2020 |
| | | | | EP | 3594268 | A1 | 15 January 2020 |
| | | | | JP | 2020-510115 | A | 02 April 2020 |
| | | | | JP | 2020-510109 | A | 02 April 2020 |
| | | | | JP | 2020-509144 | A | 26 March 2020 |
| | | | | JP | 2020-511568 | A | 16 April 2020 |
| | | | | KR | 10-2018-0103664 | A | 19 September 2018 |
| | | | | KR | 10-2018-0103665 | A | 19 September 2018 |
| | | | | KR | 10-2018-0103666 | A | 19 September 2018 |
| | | | | KR | 10-2018-0103668 | A | 19 September 2018 |
| | | | | KR | 10-2018-0103669 | A | 19 September 2018 |
| | | | | KR | 10-2018-0103745 | A | 19 September 2018 |
| | | | | KR | 10-2018-0103746 | A | 19 September 2018 |
| | | | | KR | 10-2018-0103748 | A | 19 September 2018 |
| | | | | KR | 10-2018-0103750 | A | 19 September 2018 |
| | | | | KR | 10-2018-0103751 | A | 19 September 2018 |
| | | | | KR | 10-2018-0103752 | A | 19 September 2018 |
| | | | | US | 2020-0316819 | A1 | 08 October 2020 |
| | | | | US | 2020-0071470 | A1 | 05 March 2020 |
| | | | | US | 2020-0032049 | A1 | 30 January 2020 |
| | | | | US | 2020-0032005 | A1 | 30 January 2020 |
| | | | | WO | 2018-164539 | A1 | 13 September 2018 |
| | | | | WO | 2018-164541 | A1 | 13 September 2018 |
| | | | | WO | 2018-164540 | A1 | 13 September 2018 |
| | | | | WO | 2018-164542 | A1 | 13 September 2018 |
| KR | 10-2011-0128618 | A | 30 November 2011 | KR | 10-1240989 | B1 | 11 March 2013 |
| KR | 10-2012-0096350 | A | 30 August 2012 | KR | 10-1231629 | B1 | 08 February 2013 |
| KR | 10-2019-0076498 | A | 02 July 2019 | None | | | |

Form PCT/ISA/210 (patent family annex) (July 2019)

**EP 4 043 514 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001288273 A